# NEUE EUROPÄISCHE PATENTSCHRIFT

(11) **EP 2 740 329 B2**
(45) Veröffentlichungstag und Bekanntmachung des Hinweises auf die Entscheidung über den Einspruch: **10.05.2023**
(45) Hinweis auf die Patenterteilung: 15.06.2016
(21) Anmeldenummer: 12751017.0
(22) Anmeldetag: 02.08.2012
(51) Int. Cl.: H05B 37/02, G06F 13/38, H04L 12/10

(54) **BUSSPANNUNGSVERSORGUNG MIT VERRINGERTER VERLUSTLEISTUNG**
BUS VOLTAGE POWER SUPPLY WITH REDUCED LOSSES
SOURCE DE TENSION POUR UN BUS AVEC PERTES REDUITES

(30) Priorität: 05.08.2011 DE 102011080500
(43) Veröffentlichungstag der Anmeldung: 11.06.2014
(73) Patentinhaber: Tridonic GmbH & Co. KG, 6851 Dornbirn (AT)
(72) Erfinder: FITZ, Thomas, 6850 Dornbirn (AT); KÜHNE, Tobias, 6820 Frastanz (AT); FECHTIG, Robert, 6951 Lingenau (AT)
(74) Vertreter: Rupp, Christian
(86) Internationale Anmeldenummer: PCT/EP2012/065126
(87) Internationale Veröffentlichungsnummer: WO 2013/020886

(56) Entgegenhaltungen:
- DE-A1- 10 034 087
- DE-B3-102009 011 225
- DE-T2- 68 916 190
- DE-U1-202005 011 950
- US-A- 5 589 813
- YUFANG ZHONG ET AL: "Research of feedback control of lighting system based on DALI", INDUSTRIAL INFORMATICS, 2009. INDIN 2009. 7TH IEEE INTERNATIONAL CONFERENCE ON, IEEE, PISCATAWAY, NJ, USA, 23. Juni 2009 (2009-06-23), Seiten 396-401, XP031504275, ISBN: 978-1-4244-3759-7
- HUADONG LI ET AL: "Development and research of lighting system based on DALI", INDUSTRIAL ELECTRONICS AND APPLICATIONS, 2008. ICIEA 2008. 3RD IEEE CONFERENCE ON, IEEE, PISCATAWAY, NJ, USA, 3. Juni 2008 (2008-06-03), Seiten 1302-1307, XP031293936, ISBN: 978-1-4244-1717-9

## Beschreibung

Die Erfindung bezieht sich auf die Verringerung der Verlustleistung im Sendebetrieb auf Bussen (z.B., auf Digitalbussen nach Digitalbusprotokollen), bei denen im Ruhezustand der Bus spannungsführend ist. Zum Senden einer Information wird der Bus durch einen Busteilnehmer kurzgeschlossen. Ein Beispiel für ein derartiges Busprotokoll ist der DALI-Industriestandard.

Der Bus wird dabei von einer Busversorgungsschaltung vorzugsweise mit einer DC-Spannung versorgt. Durch das Kurzschließen fließt dann ein sehr hoher Strom, wodurch zeitweise eine hohe Verlustleistung erzeugt wird.

Die entstehende Verlustleistung tritt in Form von z.B. Verlustwärme an Leistungsteilen innerhalb der Busversorgungsschaltung auf. Die entstehende Verlustwärme erfordert einen hohen konstruktiven Aufwand beim Gerätedesign (z.B. größere Kühlfläche, Konvektionsmöglichkeit usw.), dadurch entstehen Mehrkosten in der Herstellung und Entwicklung des Produkts. Die hohe Verlustleistung wirkt sich auch auf den Gesamtenergieverbrauch des Gerätes im Betrieb aus. Eine ähnliche Busversorgungsschaltung ist bekannt aus Patentschrift DE 68916190T2.

Zur Verringerung der Verlustleistung stellt die Erfindung also ein Verfahren und eine Vorrichtung gemäß den unabhängigen Ansprüchen bereit.

In einem ersten Aspekt stellt die Erfindung eine Busversorgungsschaltung zur Spannungsversorgung eines digitalen Busses mit mindestens einem Busteilnehmer bereit, wobei die Busversorgungsschaltung im Ruhezustand eine DC-Spannung auf den Bus beaufschlagt, welche DC-Spannung zur Übermittlung eines Datenbits zumindest zeitweise kurzgeschlossen wird, mit einem Verarbeitungsmittel, das dazu eingerichtet ist, den Kurzschluss durch Überwachung einer elektrischen Größe des Busses zu erkennen, wobei die Busversorgungsschaltung bei Erkennen des Kurzschlusses die Versorgungsspannung des Busses zumindest verringert, bis die Busversorgungsschaltung ein Ende des Kurzschlusses erkennt. Während der Übermittlung des Datenbits kann die Busversorgungsschaltung die Versorgungsspannung kurzzeitig aktivieren bzw. erhöhen und somit einen etwaigen Busstrom detektieren, falls durch Kurzschliessen noch der Sendebetrieb eines Bits aktiv ist.

Das Verarbeitungsmittel kann ein Mikroprozessor sein.

Der Kurzschluss dadurch erkannt werden kann, dass der Busstrom einen vorgegebenen Schwellwert übersteigt.

Der Schwellwert kann ein Wert für den Ruhestrom sein.

Der Kurzschluss kann durch ein Abfallen der Spannung erkannt werden.

Der Kurzschluss kann erkannt werden, wenn die Spannung unter einen Schwellwert fällt.

Bei Erkennen eines Kurzschlusses kann die Busversorgungsschaltung die Versorgungsspannung abschalten.

Innerhalb der vorgegebenen Sendezeitdauer eines Bits können mehrere dieser Test-Aktivierungen durchgeführt werden, wobei der Abstand der Test-Aktivierungen konstant oder variabel sein kann. Insbesondere kann die Versorgungsspannung während der Übermittlung des Datenbits zum Ende der Übermittlung hin häufiger aktiviert werden (die zeitliche Dauer eines Sendebits ist aus dem Busprotokoll vorgegeben). Insbesondere kann die Zeit zwischen den Aktivierungen nach jeder Aktivierung halbiert werden.

Die Busversorgungsschaltung kann die Versorgungsspannung erhöhen, insbesondere anschalten, wenn bei einer Aktivierung ein Busstrom unterhalb und/oder eine Spannung oberhalb eines Schwellwertes erkannt wird.

Der Bus kann ein DALI- oder LM-Bus (Luxmate-Bus, ein Firmenstandard der Zumtobel-Gruppe) sein.

Das Verarbeitungsmittel kann die Busversorgungsschaltung regeln.

Die Busversorgungsschaltung kann die Versorgungsspannung mit einer an das Busprotokoll angepassten Reaktionsgeschwindigkeit Ein- bzw. Ausschalten, bzw. die Versorgungsspannung erhöhen oder verringern.

In einem weiteren Aspekt stellt die Erfindung ein Bussystem mit einer Busversorgungsschaltung wie oben beschrieben und mindestens einem Busteilnehmer, der den Bus zur Übermittlung eines Datenbits zumindest zeitweise kurzschließt bereit.

In einem noch weiteren Aspekt stellt die Erfindung ein Verfahren zur Regelung einer Busversorgungsschaltung zur Spannungsversorgung eines digitalen Busses mit mindestens einem Busteilnehmer, wobei die Busversorgungsschaltung im Ruhezustand eine DC-Spannung auf den Bus beaufschlagt, welche DC-Spannung zur Übermittlung eines Datenbits zumindest zeitweise kurzgeschlossen wird, mit den Schritten: überwachen einer elektrischen Größe des Busses, erkennen eines Kurzschlusses auf dem Bus durch Überwachung einer elektrischen Größe des Busses durch ein Verarbeitungsmittel, zumindest verringern der Versorgungsspannung des Busses bei Erkennen des Kurzschlusses, bis das Verarbeitungsmittel ein Ende des Kurzschlusses erkennt, wobei bei Erkennen des Kurzschlusses die Busversorgungsschaltung die Versorgungsspannung kurzzeitig aktiviert und den Busstrom detektiert.

Die Erfindung sieht also vor, die Spannung der Busversorgungsschaltung zumindest wesentlich zu verringern (beispielsweise um wenigstens 50%, bzw. sie vollständig abzuschalten) sobald die Busversorgungsschaltung erkennt, dass der Strom auf dem Bus deutlich über einen Schwellwert, z.B. den Ruhestrom ansteigt, also ein Teilnehmer im Sendebetrieb den Bus, z.B. den DC-Bus, kurzschließt. Daher wird während der Sendezeitdauer eines Bits keinerlei bzw. wesentlich weniger Strom fließen, obwohl der Bus durch den sendenden Teilnehmer kurzgeschlossen ist. Die Zeitdauer T zum Senden eines Bits ist im Allgemeinen bekannt. Für den digitalen DALI-Industriestandard beträgt sie beispielsweise 416,67 Mikrosekunden.

Durch die Minimierung der Verlustleistung kann die Gesamtanschlussleistung der Busversorgungsschaltung erheblich gesenkt werden was zu kleineren Betriebskosten des Geräts führt und zur höheren Energieeffizienz des Bussystems beitragen kann.

Sicherheitshalber wird die Busversorgungsschaltung bereits vor Ablauf dieser Zeitdauer T die Spannung in der Busversorgungsschaltung erhöhen bzw. anschalten, um zu sehen, ob ein stark ansteigender Strom fließt, der über dem Schwellwert, z.B. dem Ruhestrom liegt. Falls ein hoher, über dem Schwellwert liegender, Strom erkannt wird, ist daraus zu schließen, dass der Bus nach wie vor noch kurzgeschlossen ist und die Busversorgungsschaltung kann daraufhin die Spannung wieder abschalten bzw. verringern.

Das Testen vor Ablauf der Bit-Sendezeitdauer T ist notwendig, da sog. "Kollisionen" oder Protokollverletzungen (zu kurze Sendezeitdauer oder nicht synchrone Sendezeitdauer) nicht ausgeschlossen werden können.

Es ist auch vorgesehen, dass das kurzzeitige Einschalten bzw. Erhöhen der Busleistung bzw. der Busspannung zu Testzwecken zum Ende der definierten Sendezeitdauer eines Bits hin in kürzeren Abständen stattfindet. Somit wird die während der Sendezeitdauer eines Bits in der Busversorgungsschaltung anfallende Verlustleistung stark reduziert, was nicht zuletzt auch die thermische Belastung des Sendezweigs verringert.

Durch das Zu- und Abschalten, bzw. das Verringern und Erhöhen, der Spannung der Busversorgungsschaltung ist kein elektromagnetisches Störpotential zu befürchten, da erfindungsgemäß vorgesehen ist, dass die Flankenverläufe beim Abschalten bzw. Zuschalten der Spannung der Busversorgungsschaltung zumindest nicht steiler sind, als diejenigen, die sich bei normalem Sendebetrieb ergeben. Vorzugsweise sind die Flanken im Wesentlichen identisch zu den üblichen Flanken im Sendebetrieb.

Das kurzzeitige Abschalten ist auch nicht störend für diejenigen Teilnehmer, die die Busspannung gleichzeitig als ihre eigene Energieversorgung verwenden. Es ist nämlich üblicherweise vorgesehen, dass die Energieversorgung im Ruhezustand des Busses bei höherem (DC-)Pegel erfolgt und die Zeitdauer im Sendebetrieb, in dem die Busspannung durch Kurzschließen zusammenbricht, durch diese Teilnehmer gepuffert wird.

In der Busversorgungsschaltung ist zur Implementierung der genannten Vorgehensweise üblicherweise ein Mikrocontroller vorgesehen. Während der Testimpulse durch die Busversorgungsschaltung fließt zwar kurzzeitig ein höherer Strom, die Spannung bleibt indessen auf dem Low-Pegel (beispielsweise Null Volt) da weiterhin der Sendeteilnehmer die Busleitung kurzschließt.

In einem weiteren Aspekt der Erfindung werden die Testimpulse nicht durch eine Erhöhung der Spannung veranlasst, sondern die Busversorgungsschaltung kann vielmehr adaptiv die Busspannung während des Sendebetriebs eines Teilnehmers auf eine Spannung größer Null Volt verringern. Insbesondere kann die Verringerung derart sein, dass der sich ergebende Strom weiterhin in einem detektierbaren Abstand über dem Ruhestrom liegt. Bei dieser Ausgestaltung ist kein impulsartiges Testen (Erhöhen der Busspannung) notwendig, sondern die Spannung kann vielmehr verringert bleiben (zumindest bis zu einem Zeitpunkt kurz vor dem Ende der Zeitdauer eines Sendebetriebs), solange der sich einstellende Kurzschlussstrom über dem Ruhestrom liegt. Wenn während der abgesenkten Busspannung der Sendebetrieb beendet wird, wird der Strom wieder unter den Pegel, z.B. auf den Ruhestromwert, absinken und die Busversorgungsschaltung wird dadurch zu einem schnellen Erhöhen der Busspannung veranlasst.

Weitere Aspekte der Erfindung werden mit Blick auf die Figuren beschrieben.
- Fig. 1: zeigt schematisch ein Ersatzschaltbild für einen Bus mit einer Busversorgungsschaltung und mehreren Busteilnehmen.
- Fig. 2: zeigt exemplarisch einen Kommunikationsframe eines Busprotokolls.
- Fig. 3: zeigt eine von der Busversorgungsschaltung erzeugte Spannung.
- Fig. 4: veranschaulicht einen Energieverbrauch pᵥ bei der Buskommunikation.
- Fig. 5a: zeigt wiederum exemplarisch einen Kommunikationsframe eines Busprotokolls.
- Fig. 5b: zeigt eine Darstellung der Busspannung und des Kurzschlussstromes bei einer erfindungsgemäßen Busversorgung.
- Fig. 5c: veranschaulicht beispielhaft einen reduzierten Energieverbrauch der aus der Verwendung der erfindungsgemäßen Busversorgungsschaltung resultiert.
- Fig. 6: veranschaulicht anhand eines Flussdiagramms das erfindungsgemäße Verfahren.

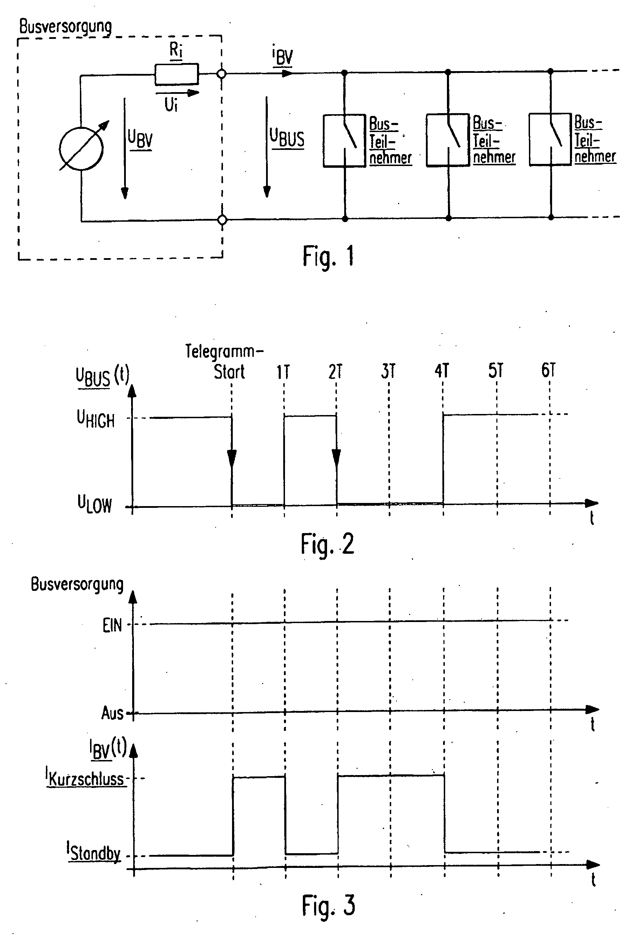

In Fig. 1 ist schematisch ein Bussegment mit einer Busversorgungsschaltung und mehreren Teilnehmen gezeigt. Darin bezeichnet U_{BV} eine (annähernd konstante)Spannung, die durch die Busversorgungsschaltung erzeugt wird, uᵢ eine Spannung am Innenwiderstand der Busversorgung, u_{BUS} eine Spannung am Bus (Spannungsabfall auf Busleitung ist vernachlässigt), i_{BV} einen Stromfluss aus der Busversorgung, Rᵢ einen Innenwiderstand der Busversorgungsschaltung und pᵥ eine Verlustleistung innerhalb der Busversorgung.

Bei der Kommunikation über Feldbussysteme (z.B. DALI, LM-Bus), welche in aktivem Zustand einen Hochpotential-Pegel ausgeben, erfolgt die Spannungs-/Strom-Versorgung der Buskommunikationsschnittstelle bzw. der Busteilnehmer über eine zentrale Busversorgung.

Die Busversorgungsschaltung besteht im Wesentlichen aus einer geregelten DC-Spannungsversorgung mit einer nachfolgenden busspezifischen Strombegrenzungsschaltung.

Die Erzeugung der eigentlichen Kommunikationssignale erfolgt durch "aktives Kurzschließen" der zentralen Busversorgungsschaltung durch den sendenden Busteilnehmer in zeitlicher Form des zu übertragenden Bitmusters.

Das kurzzeitige Kurzschließen der Busversorgungsschaltung führt zum Fluss eines maximalen Stromes i_{BV} über den Innenwiderstand Rᵢ der Busversorgung, bzw. in weiterer Folge zur Umwandlung in die Verlustleistung pᵥ. Die Verlustleistung verhält sich dabei direkt proportional zur Intensität der Buskommunikation, d.h. zu der Menge übertragener Daten und/oder Häufigkeit von Übertragungen.

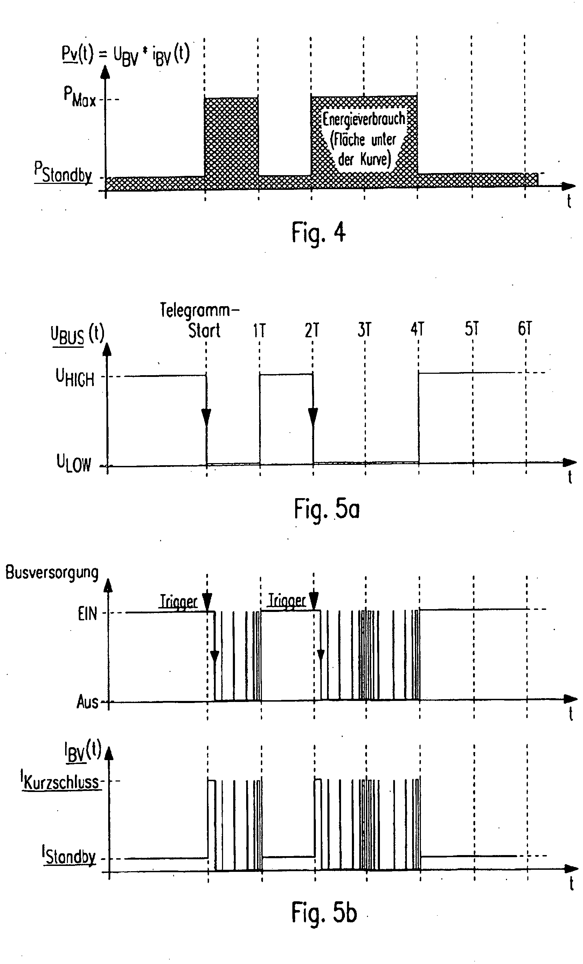

Fig. 2 zeigt exemplarisch einen Kommunikationsframe eines Busprotokolls. Fig. 3 zeigt die von der Busversorgungsschaltung erzeugte Spannung (oben) und den Stromverlauf (unten) bei konventioneller Busversorgung. Durch kurzschließen der durch die Busversorgungsschaltung gelieferten HIGH-Spannung erzeugt der sendende Busteilnehmer das typische Bitmuster. Fig. 4 veranschaulicht den Energieverbrauch pᵥ bei der Buskommunikation (pᵥ (t) = U_{BV} * i_{BV} (t)). Durch das Kurzschließen zur Erzeugung einer Kommunikations-LOW (Niederpegel)-Phase (u_{BUS} → u_{LOW}, i_{BV} → i_{Kurzschluss}) wird während dieser Phase die gezeigte Leistung pᵥ (Energieverbrauch, Fläche unter der Kurve) von der Busversorgungsschaltung aufgenommen. Ein Großteil dieser Leistung wird als Verlustwärme am Widerstand Rᵢ abgestrahlt.

Um die Verlustleistung in den Kommunikations-LOW-Phasen zu reduzieren oder zu vermeiden, schaltet die energieeffiziente geregelte Busversorgungsschaltung (egB) die Busspannung während der Kommunikations-LOW-Phase aus oder verringert diese. Durch diese Maßnahme fließt der maximale Busstrom i_{BV} zeitlich wesentlich kürzer was zu einem deutlich reduzierten Energieverbrauch der Busversorgungsschaltung führt.

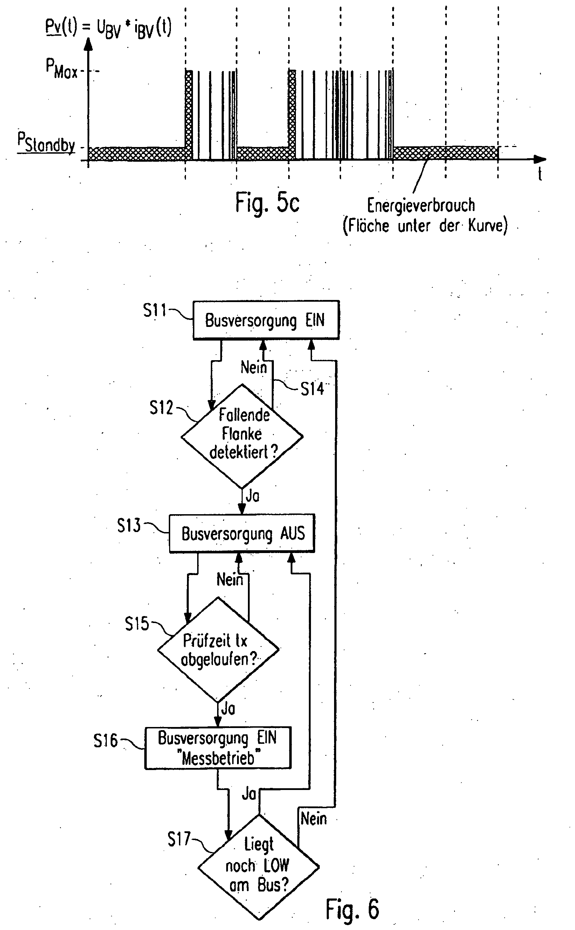

Rechtzeitig zum Ende der Kommunikations-LOW-Phase muss die Busversorgungsschaltung egB wieder eingeschaltet werden. Zudem wird auch während der Kommunikations-LOW-Phase geprüft, ob der Sender nach wie vor kurzschließt, indem die Busversorgungsschaltung egB kurzzeitig eingeschaltet und eine Messung des i_{BV} durchgeführt wird. Figs. 5a-5c zeigen die Spannungs-, Strom-, Leistungskausalität anhand eines Busses welcher mit der egB versorgt wird. Dabei zeigt Fig. 5a exemplarisch wiederum einen Kommunikationsframe eines Busprotokolls. Fig. 5b zeigt eine Darstellung der Busspannung und des Kurzschlussstromes bei einer erfindungsgemäßen Busversorgungsschaltung egB, bei der die Spannung U_{BV} während der der Kommunikations-LOW-Phasen abgeschaltet und zeitweise wieder eingeschaltet wird. Dieses zeitweise Einschalten erfolgt wiederholt. Wie in Fig. 5c beispielhaft gezeigt, reduziert sich dadurch der Energieverbrauch/Leistungsverlust bei der Buskommunikation signifikant.

Die Funktionsweise der Busversorgungsschaltung egB kann mit dem in Fig. 6 anhand eines Flussdiagramms dargestellten Verfahren beschrieben werden. Nach einem Einschalten der der Busversorgungsschaltung egB S11 wird die Busspannung u_{BUS}/der Busstrom i_{BV} kontinuierlich überwacht. Wird eine Änderung der Busspannung u_{BUS}/des Busstroms i_{BV} detektiert, z.B: durch eine fallende Flanke für die Busspannung u_{BUS}, bzw. durch eine steigende Flanke für den Busstrom i_{BV}, so schaltet die Busversorgungsschaltung egB die Versorgungsspannung U_{BV} ab S13 oder verringert diese. Andernfalls bleibt die Versorgungsspannung U_{BV} eingeschaltet S14. Während die Versorgungsspannung U_{BV} ausgeschaltet/verringert ist, wird zu einer Zeit tₓ (Wartezeit tₓ) geprüft S15, ob immer noch eine Kommunikations-LOW-Phase gilt, also der Bus noch kurzgeschlossen ist. tₓ bezeichnet dabei einen Bruchteil der Halbbitzeit, der in jedem Schleifendurchlauf, d.h. immer dann, wann die Prüfung ergibt, dass noch eine Kommunikations-LOW-Phase vorliegt, verringert, z.B. halbiert wird (z.B. T/2, T/4, T/8, ... für tₓ). Jeweils nach Ablauf der aktuellen Zeit tₓ wird also die Busversorgungsschaltung kurz eingeschaltet oder die Busspannung wird erhöht, um die Ausgangslast zu messen S16 (Messbetrieb). Liegt noch eine Kommunikations-LOW-Phase vor S17, so schaltet die Busversorgungsschaltung wieder ab, bzw. verringert die Versorgungsspannung U_{BV} S18. Andernfalls schaltet sich sie Busversorgungsschaltung wieder voll ein. Es wird also Busversorgungsschaltung wiederholt kurzzeitig eingeschaltet bzw. die Busspannung erhöht, um den Zustand der Ausgangslast zu erfassen, wobei diese kurzzeitiges Zuschalten wieder abgebrochen wird, wenn noch keine Änderung der Ausgangslast erkannt wurde.

## Patentansprüche

1. Busversorgungsschaltung (Fig.1) zur Spannungsversorgung eines digitalen Busses mit mindestens einem Busteilnehmer, wobei die Busversorgungsschaltung im Ruhezustand eine DC-Spannung (U_{bus}) auf den Bus beaufschlagt, welche DC-Spannung (U_{bus}) zur Übermittlung eines Datenbits zumindest zeitweise kurzgeschlossen wird,
mit einem Verarbeitungsmittel (Fig.6), das dazu eingerichtet ist, den Kurzschluss durch Überwachung einer elektrischen Größe des Busses zu erkennen, wobei die Busversorgungsschaltung bei Erkennen des Kurzschlusses die Versorgungsspannung des Busses zumindest verringert, bis das Verarbeitungsmittel ein Ende des Kurzschlusses erkennt, **dadurch gekennzeichnet dass** während der Übermittlung des Datenbits die Busversorgungsschaltung die Versorgungsspannung kurzzeitig aktiviert und den Busstrom (i_{bv}) detektiert.

2. Busversorgungsschaltung nach Anspruch 1, wobei der Kurzschluss **dadurch** erkannt wird, dass der Busstrom einen Schwellwert übersteigt.

3. Busversorgungsschaltung nach einem der vorgehenden Ansprüche, wobei der Schwellwert ein Wert für den Ruhestrom ist.

4. Busversorgungsschaltung nach einem der vorgehenden Ansprüche, wobei der Kurzschluss durch ein Abfallen der Spannung erkannt wird.

5. Busversorgungsschaltung nach einem der vorgehenden Ansprüche, wobei der Kurzschluss erkannt wird, wenn die Spannung unter einen Schwellwert fällt.

6. Busversorgungsschaltung nach einem der vorgehenden Ansprüche, wobei bei Erkennen eines Kurzschlusses die Busversorgungsschaltung die Versorgungsspannung abschaltet.

7. Busversorgungsschaltung nach einem der vorgehenden Ansprüche, wobei die Versorgungsspannung während der Übermittlung des Datenbits zum Endeder Übermittlung hin häufiger aktiviert wird, insbesondere die Zeit zwischen den Aktivierungen nach jeder Aktivierung halbiert wird.

8. Busversorgungsschaltung nach einem der vorgehenden Ansprüche, wobei die Busversorgungsschaltung die Versorgungsspannung erhöht, insbesondere anschaltet, wenn bei einer Aktivierung ein Busstrom unterhalb und/oder eine Spannung oberhalb eines Schwellwertes erkannt wird.

9. Busversorgungsschaltung nach einem der vorgehenden Ansprüche, wobei das Verarbeitungsmittel die Busversorgungsschaltung regelt.

10. Busversorgungsschaltung nach einem der vorgehenden Ansprüche, wobei die Busversorgungsschaltung die Versorgungsspannung mit einer an das Busprotokoll angepassten Reaktionsgeschwindigkeit Ein-bzw. Ausschaltet, bzw. die Versorgungsspannung erhöht oder verringert.

11. Bussystem mit einer Busversorgungsschaltung nach einem der vorgehenden Ansprüche und mindestens einem Busteilnehmer, der den Bus zur Übermittlung eines Datenbits zumindest zeitweise kurzschließt.

## Claims

1. A bus supply circuit (Fig. 1), for voltage supply to a digital bus with at least one bus subscriber, wherein the bus supply circuit applies a DC voltage (U_{BUS}) to the bus in the quiescent state, which DC voltage (U_{BUS}) is at least temporarily short-circuited for transmitting a data bit, with a processing means (Fig. 6), which is designed to identify the short circuit by monitoring an electrical variable of the bus, wherein the bus supply circuit at least reduces the supply voltage of the bus in the event that the short circuit is identified until the processing means identifies an end of the short circuit, **characterized in that** during the transmission of the data bit the bus supply circuit briefly activates the supply voltage and detects the bus current (i_{BV}).

2. A bus supply circuit according to Claim 1, wherein the short circuit is identified in that the bus current exceeds a threshold value.

3. A bus supply circuit according to one of the preceding claims, wherein the threshold value is a value for the quiescent current.

4. A bus supply circuit according to one of the preceding claims, wherein the short circuit is identified by a drop in the voltage.

5. A bus supply circuit according to one of the preceding claims, wherein the short circuit is identified, if the voltage falls below a threshold value.

6. A bus supply circuit according to one of the preceding claims, wherein in the event that a short circuit is identified the bus supply circuit switches off the supply voltage.

7. A bus supply circuit according to one of the preceding claims, wherein the supply voltage is more frequently activated during the transmission of the data bit towards the end of the transmission, in particular the time between the activations after each activation is halved.

8. A bus supply circuit according to one of the preceding claims, wherein the bus supply circuit increases the supply voltage, in particular switches it on, if during an activation a bus current is identified below and/or a voltage above a threshold value.

9. A bus supply circuit according to one of the preceding claims, wherein the processing means controls the bus supply circuit.

10. A bus supply circuit according to one of the preceding claims, wherein the bus supply circuit switches the supply voltage on or off with a reaction speed adapted to the bus protocol, or increases or reduces the supply voltage.

11. A bus system with a bus supply circuit according to one of the preceding claims and at least one bus subscriber, which at least temporarily short circuits the bus for transmitting a data bit.

## Revendications

1. Circuit d'alimentation de bus (Fig. 1) pour l'alimentation en tension d'un bus numérique avec au moins un abonné de bus, le circuit d'alimentation de bus alimentant le bus, dans l'état de repos, avec une tension continue (U_{bus}), cette tension continue (U_{bus}) étant court-circuité au moins temporairement pour la transmission d'un bit de données,
avec un moyen de traitement (Fig. 6) conçu pour détecter le court-circuit grâce à la surveillance d'une valeur électrique du bus,
le circuit d'alimentation de bus effectuant au moins, lors de la détection du court-circuit, une réduction de la tension d'alimentation du bus jusqu'à ce que le moyen de traitement détecte une fin du court-circuit,
**caractérisé en ce que**
pendant la transmission du bit de données, le circuit d'alimentation du bus active brièvement la tension d'alimentation et détecte le courant de bus (i_{bv}).

2. Circuit d'alimentation de bus selon la revendication 1, le court-circuit étant détecté grâce au fait que le courant de bus dépasse une valeur seuil.

3. Circuit d'alimentation de bus selon l'une des revendications précédentes, la valeur seuil étant une valeur pour le courant de repos.

4. Circuit d'alimentation de bus selon l'une des revendications précédentes, le court-circuit étant détecté grâce à une chute de la tension.

5. Circuit d'alimentation de bus selon l'une des revendications précédentes, le court-circuit étant détecté lorsque la tension tombe en dessous d'une valeur seuil.

6. Circuit d'alimentation de bus selon l'une des revendications précédentes, le circuit d'alimentation de bus coupant la tension d'alimentation lors de la détection d'un court-circuit.

7. Circuit d'alimentation de bus selon l'une des revendications précédentes, la tension d'alimentation étant activée plus fréquemment pendant la transmission du bit de données en direction de la fin de la transmission, plus particulièrement le temps entre les activations est divisé par deux après chaque activation.

8. Circuit d'alimentation de bus selon l'une des revendications précédentes, le circuit d'alimentation de bus augmentant la tension d'alimentation, plus particulièrement mettant en marche celle-ci lorsque, lors d'une activation, un courant de bus en dessous d'une valeur seuil et/ou une tension au-dessus d'une valeur seuil est détecté.

9. Circuit d'alimentation de bus selon l'une des revendications précédentes, le moyen de traitement régulant le circuit d'alimentation de bus.

10. Circuit d'alimentation de bus selon l'une des revendications précédentes, le circuit d'alimentation de bus mettant en marche ou arrêtant la tension d'alimentation ou augmentant ou réduisant la tension d'alimentation avec une vitesse de réaction adaptée au protocole du bus.

11. Système de bus avec un circuit d'alimentation de bus selon l'une des revendications précédentes et au moins un abonné de bus qui court-circuite le bus au moins temporairement pour la transmission d'un bit de données.
